# EUROPÄISCHE PATENTSCHRIFT

(11) **EP 3 042 108 B1**
(45) Veröffentlichungstag und Bekanntmachung des Hinweises auf die Patenterteilung: **07.03.2018**
(21) Anmeldenummer: 14777504.3
(22) Anmeldetag: 19.08.2014
(51) Int. Cl.: F16J 15/447

(54) **DICHTELEMENT MIT ZUSATZRING**
SEALING ELEMENT WITH ADDITIONAL RING
ÉLÉMENT D'ÉTANCHÉITÉ MUNI D'UNE BAGUE SUPPLÉMENTAIRE

(30) Priorität: 05.09.2013 DE 202013104012 U
(43) Veröffentlichungstag der Anmeldung: 13.07.2016
(73) Patentinhaber: Paul Müller GmbH & Co. KG Unternehmensbeteiligungen, 90411 Nürnberg (DE)
(72) Erfinder: ELBACHER, Manfred, 90411 Nürnberg (DE); RADKE, Andreas, 90427 Nürnberg (DE)
(74) Vertreter: Lösch, Christoph Ludwig Klaus
(86) Internationale Anmeldenummer: PCT/DE2014/100292
(87) Internationale Veröffentlichungsnummer: WO 2015/032385

(56) Entgegenhaltungen:
- DE-B- 1 109 470
- US-A- 5 174 583

## Beschreibung

Die Erfindung betrifft ein Dichtelement zur Abdichtung einer zylindrischen Innenfläche eines ersten Maschinenbauteils und einer zylindrischen Außenfläche eines zweiten Maschinenbauteils.

Als sogenannte Spalt- oder Labyrinthdichtungen ausgebildete Dichtelemente sind vorbekannt (Siehe DE-B-1109470). In diesen Spalt- oder Labyrinthdichtungen erfolgt eine berührungslose Abdichtung durch das Vorsehen eines im Allgemeinen mäanderförmig ausgebildeten Dichtspaltes. Es besteht jedoch die Möglichkeit, dass in diesen Dichtspalt Umgebungsmedien (insbesondere Flüssigkeiten) eindringen. Spalt- oder Labyrinthdichtungen sind folglich in der Regel nicht absolut dicht, sondern ermöglichen zu einem gewissen Grad das Passieren von Umgebungsmedien.

Der Erfindung liegt die Aufgabe zugrunde, ein Dichtelement mit verbesserten Dichteigenschaften anzubieten.

Diese Aufgabe wird durch ein Dichtelement mit den Merkmalen des Anspruchs 1 gelöst. Vorteilhafte Ausführungsformen sind in den Unteransprüchen beschrieben.

Das erfindungsgemäße Dichtelement dient zur Abdichtung einer zylindrischen Innenfläche eines ersten Maschinenbauteils und einer zylindrischen Außenfläche eines zweiten Maschinenbauteils. Das erfindungsgemäße Dichtelement besitzt einen Innenring, einen koaxial zum Innenring angeordneten Zusatzring, einen koaxial zum Innenring angeordneten Außenring und einen Dichtspalt, welcher durch eine außenliegende Mantelfläche des Innenrings, eine innenliegende Mantelfläche des Außenrings sowie durch eine außenliegende Mantelfläche und eine Stirnseite (Stirnfläche) des Zusatzrings gebildet wird. Der Zusatzring ist mit einem Teil einer äußeren Mantelfläche des Innenrings verbunden. Der Dichtspalt weist in einem Axialschnitt durch die gemeinsame Achse des Innenrings, des Außenrings und des Zusatzrings ein mäanderförmiges Profil auf.

Durch das Vorhandensein des Zusatzringes erhält der Dichtspalt ein Profil, welches eine Hinterschneidung aufweist. Damit ist ein Dichtspalt mit besonders langem "Dichtweg" möglich. Insbesondere bildet der Zusatzring eine Art "Fangrinne" für das in den Dichtspalt eintretende Umgebungsmedium aus. In dieser Fangrinne wird bei Stillstand der abzudichtenden Maschinenbauteile das Umgebungsmedium (typischerweise Flüssigkeit) gesammelt und kann dann anschließend - bei Relativbewegung der abzudichtenden Maschinenbauteile - durch Zentrifugalkräfte abtransportiert werden (beispielsweise durch die weiter unten noch näher beschriebene Rückförderung). Der Zusatzring bildet damit ein weiteres Hindernis für das eindringende Medium und verbessert auf diese Weise die Dichteigenschaften des Dichtelements.

Ein weiterer Vorteil des Zusatzrings liegt darin, dass dieser die Relativbewegung des Innenrings relativ zum Außenring in axialer Richtung begrenzt und somit einem Zerfallen des Dichtelements entgegenwirkt. Mit anderen Worten erzeugt der Zusatzring ein nichtzerfallendes Dichtelement.

In einer vorteilhaften Ausführungsform weist das Profil des Dichtspalts folgenden Profilabschnitten aufweist: (a) einen Eingangsabschnitt als einen erster Endabschnitt des Dichtspalts mit einem ersten Radius zur gemeinsamen Achse; (b) einem Ausgangsabschnitt als einen zweiten Endabschnitt des Dichtspalts mit einem zweiten Radius zur gemeinsamen Achse, wobei der zweite Radius kleiner als der erste Radius ist; und (c) einen zwischen dem Eingangsabschnitt und dem Ausgangsabschnitt ausgebildeten Mäanderabschnitt. Die außenliegende Mantelfläche des Zusatzrings bildet hierbei eine Begrenzungsfläche des Ausgangsabschnittes, insbesondere die radial innenliegende Begrenzungsfläche des Ausgangsabschnitts.

Mit anderen Worten ist der Zusatzring ausgangsabschnittsseitig angebracht und die außenliegende Mantelfläche des Zusatzrings und die in Richtung Eingangsabschnitt gelegene Stirnseite des Zusatzrings bilden Begrenzungsflächen des Dichtspaltes. Insbesondere bildet die außenliegende Mantelfläche des Zusatzrings die radial innenliegende Begrenzungsfläche des Ausgangsabschnittes des Dichtspaltes und die in Richtung Eingangsabschnitt gelegene Stirnseite des Zusatzrings bildet eine Begrenzungsfläche eines Axialspaltes des Mäanderabschnitts des Dichtspaltes.

Als vorteilhaftes Verbindungsverfahren zur Verbindung des Zusatzrings mit dem Innenring hat sich die Ausbildung eines Presssitzes herausgestellt, insbesondere ein Presssitz, in welchem die innenliegende Mantelfläche des Zusatzrings mit der äußeren Mantelfläche des Innenrings verpresst ist.

In dieser vorteilhaften Ausführungsform besitzt der Ausgangsabschnitt einen geringeren Radius als der Eingangsabschnitt. Auf diese Weise werden von der Eingangsseite in den Dichtspalt eindringende Flüssigkeiten bei einer Rotation der abzudichtenden Maschinenelemente aufgrund von Zentrifugalkräften zum Eingangsabschnitt zurücktransportiert. D.h. es findet eine sog. Rückförderung statt. Dies wiederum verbessert die Dichteigenschaften des Dichtelements. Des Weiteren befindet sich die durch den Zusatzring gebildete Fangrinne ausgangsabschnittsseitig und dient zum Auffangen der bis dorthin vorgedrungenen Umgebungsmedien.

In einer weiteren vorteilhaften Ausführungsform bestehen der Innenring und/oder der Außenring aus einem Stahlwerkstoff, insbesondere aus einem gehärteten Stahlwerkstoff. Auf diese Weise besitzen der Innenring bzw. der Außenring eine derart hohe Festigkeit, dass das Dichtelement neben der Dichtfunktion zusätzlich als Anstellelement für weitere Maschinenbauteile (insbesondere Kugel-/ Wälzlager) dienen kann. So ist es möglich, Einbausituationen zu schaffen, in denen das Dichtelement direkt anschließend an ein Kugel-/ Wälzlager positioniert ist und dieses verspannt (anstellt). Es kann somit auf die üblicherweise zum Anstellen verwendeten Distanzhülsen verzichtet werden. Dies wiederum führt zu einer platzsparenden Bauweise und einer Verringerung der benötigten Bauteile.

Werden besonders hohe Maßstäbe an die Maßhaltigkeit der Konstruktion gestellt, so können in einer besonders vorteilhaften Ausführungsform eine oder mehrere Bauteilflächen des Innenrings und/oder des Außenrings, insbesondere die Stirnflächen des Innenrings und/oder des Außenrings, plangeschliffen sein. Insbesondere in Kombination mit der Ausführung des Innenrings bzw. des Außenrings als gehärteter Stahlring ergibt sich auf diese Weise ein Innen- bzw. Außenring, der besonders gut zum Anstellen eines Kugel-/ Wälzlagers geeignet ist.

Neben dem Innenring und/oder der Außenring kann auch der Zusatzring aus einem Stahlwerkstoff, ggf. auch aus einem gehärteten Stahlwerkstoff, hergestellt sein.

Soll auf die Möglichkeit eines Anstellens verzichtet werden und/oder werden geringere Anforderungen an die Festigkeit und Temperaturstabilität des Dichtelements gestellt, so kann anstelle des Stahlwerkstoffes auch ein Aluminiumwerkstoff (Aluminiumlegierung) für den Zusatzring, den Innenring und/oder den Außenring eingesetzt werden.

In einer weiteren vorteilhaften Ausführungsform weist der Mäanderabschnitt des Dichtspaltes, beginnend vom Eingangsabschnitt und endend am Ausgangsabschnitt, folgende Teilabschnitte auf: (a) einen ersten Radialspalt; (b) einen ersten Axialspalt, welcher einen Radius kleiner als der Eingangsabschnitt aufweist; (c) einen zweiten Radialspalt; (d) einen zweiten Axialspalt, welcher einen Radius kleiner als der erste Axialspalt aufweist; (e) einen dritten Radialspalt; (f) einen kombinierten Axial-Radial-Spalt; (g) einen dritten Axialspalt, welcher einen Radius kleiner als der Ausgangsabschnitt aufweist; und (h) einen vierten Radialspalt.

Unter einem Radialspalt wird hierbei ein Spalt verstanden, der sich in radialer Richtung relativ zur gemeinsamen Achse erstreckt. Unter einem Axialspalt wird entsprechend ein Spalt verstanden, der sich in axialer Richtung relativ zur gemeinsamen Achse erstreckt. Der kombinierte Axial-Radial-Spalt ist folglich ein Spalt mit Radial- und Axialanteil.

In besonders vorteilhafter Weise besitzen der der erste Axialspalt und der zweite Axialspalt jeweils eine Spalthöhe, die kleiner ist als die Spalthöhe des Eingangsabschnitts.

Durch die oben beschriebene Ausgestaltung des Mäanderabschnitts kann eine besonders hohe Dichtwirkung erreicht werden. Der erste Radialspalt beispielsweise dient der Abschirmung des eindringenden Umgebungsmediums. Die relativ geringe Spalthöhe des ersten Axialspaltes reduziert das mögliche Durchflussvolumen und erschwert auf diese Weise das Weiterfließen des eingedrungenen Umgebungsmediums. Der zweite Radialspalt dient der Rückförderung des eingedrungenen Mediums. Der zweite Axialspalt kann ein Flüssigkeitspolster gegen den Durchfluss des Umgebungsmediums generieren. Der dritte Radialspalt dient der Rückförderung und dem Abfließen von Umgebungsmedium, das sich bei Stillstand der abzudichtenden Maschinenbauteile in der Fangrinne abgesetzt hat. Der Axial-Radial-Spalt dient der Rückförderung und verhindert aufgrund der relativ großen Spalthöhe die Ausbildung von Kapillarkräften. Der vierte Radialspalt mündet im Ausgangsabschnitt und bildet zusammen mit dem Axial-Radial-Spalt die Fangrinne.

Insgesamt wird das Eindringen bzw. das Passieren eines Umgebungsmediums beginnend am Eingangsabschnitt bis zum Ausgangsabschnitt durch die oben beschriebene Ausgestaltung des Mäanderabschnitts derart erschwert, dass sogar bei Stillstand der abzudichtenden Maschinenbauteil im technisch relevanten Bereich nahezu vollständige Dichtheit erreicht werden kann - obwohl es sich um ein berührungsloses Dichtelement handelt.

In einer besonders vorteilhaften Ausführungsform weist der dritte Radialspalt einen Versatz auf. Ein derartiger Versatz verbessert die Dichtwirkung zusätzlich, da er ein weiteres Hindernis für das eindringende Umgebungsmedium darstellt und zugleich eine Rückförderung zulässt.

Die Erfindung ist anhand von Ausführungsbeispielen in den Zeichnungsfiguren weiter erläutert. Es zeigen:
- Fig. 1: eine Seitenansicht eines Dichtelements;
- Fig. 2: einen Axialschnitt des Dichtelements durch die gemeinsame Achse;
- Fig. 3: einen vergrößerten Ausschnitt des Bereichs Z aus Fig. 2 mit zusätzlich dargestellten Flächen abzudichtender Maschinenbauteile;
- Fig. 4: das Dichtelement aus den Figuren 1 bis 3 in einer ersten Einbausituation; und
- Fig. 5: das Dichtelement aus den Figuren 1 bis 3 in einer weiteren Einbausituation.

Gleiche oder gleichwirkende Teile sind in den Figuren mit gleichen Bezugszeichen versehen.

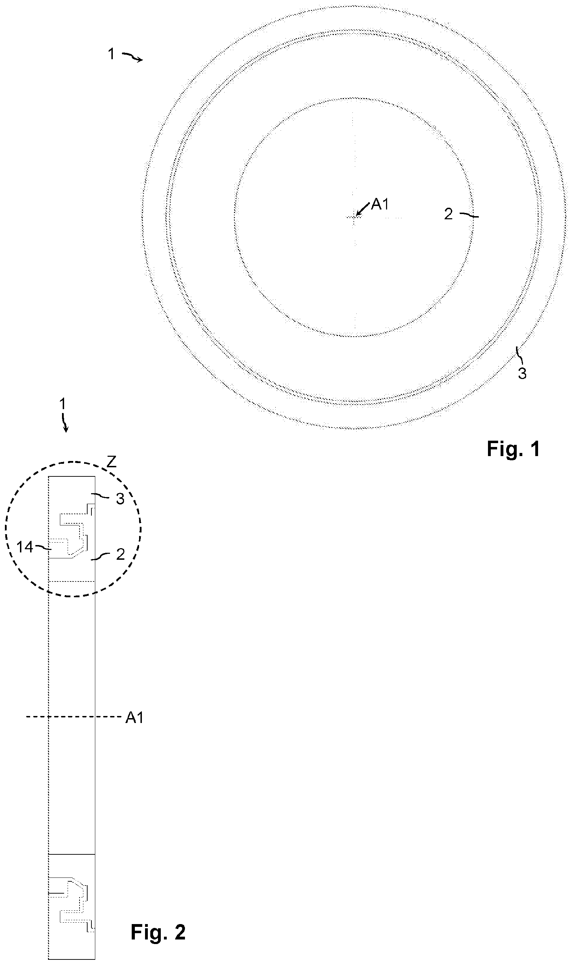

Das in den Figuren 1 bis 3 dargestellte Dichtelement 1 ist rotationssymmetrisch ausgebildet und besitzt eine im Wesentlichen ringförmige Grundstruktur. Das Dichtelement 1 weist einen Innenring 2 und einen koaxial zu diesem angeordneten Außenring 3 auf. Der Innenring 2 und der Außenring 3 sind koaxial zu der gemeinsamen Achse A1 angeordnet.

Der Innenring 2 besitzt eine im Wesentlichen axial verlaufende innenliegende Mantelfläche 4, eine erste Seitenfläche (Stirnfläche) 5, eine zweite Seitenfläche (Stirnfläche) 6 sowie eine außenliegende Mantelfläche 7. Die innenliegende Mantelfläche 4 ist mit einer zylindrischen Außenfläche 8 eines Maschinenbauteils verbunden. Die erste Seitenfläche 5 und die zweite Seitenfläche 6 verlaufen im Wesentlichen radial. Die erste Seitenfläche 5 besitzt eine geringere Breite als die zweite Seitenfläche 6.

Der Außenring 3 besitzt eine im Wesentlichen axial verlaufende außenliegende Mantelfläche 9, eine erste Seitenfläche (Stirnfläche) 10, eine zweite Seitenfläche (Stirnfläche) 11 sowie eine innenliegende Mantelfläche 12. Die außenliegende Mantelfläche 9 ist mit einer zylindrischen Innenfläche 13 eines weiteren Maschinenbauteils verbunden. Die erste Seitenfläche 10 und die zweite Seitenfläche 11 verlaufen im Wesentlichen radial. Die erste Seitenfläche 10 besitzt eine größere Breite als die zweite Seitenfläche 11.

Ferner weist das Dichtelement 1 einen Zusatzring 14 auf. Der Zusatzring besitzt eine axial verlaufende innenliegende Mantelfläche 15, eine erste Seitenfläche (Stirnfläche) 16, eine zweite Seitenfläche (Stirnfläche/ Stirnseite) 17 sowie eine außenliegende Mantelfläche 18. Die innenliegende Mantelfläche 15 ist mit einem Teil der außenliegenden Mantelfläche 7 des Innenrings 2 über einen Presssitz verbunden. Die erste Seitenfläche 16 und die zweite Seitenfläche 17 verlaufen im Wesentlichen radial. Die zweite Seitenfläche 17 entspricht einer "Stirnseite des Zusatzrings" im Sinn der vorliegenden Erfindung.

Die innenliegende Mantelfläche 12 des Außenrings 3 auf der einen Seite und die außenliegende Mantelfläche 7 des Innenrings 2 sowie die außenliegende Mantelfläche 18 und die zweite Seitenfläche 17 des Zusatzrings 14 auf der anderen Seite bilden zwischen sich einen Dichtspalt 19 aus. Mit anderen Worten kontaktieren sich die innenliegende Mantelfläche 12 des Außenrings 3 und die außenliegende Mantelfläche 7 des Innenrings 2 bzw. die innenliegende Mantelfläche 12 des Außenrings 3 und die außenliegende Mantelfläche 18 des Zusatzrings 14 nicht, sondern es verbleibt ein ringförmiger Spalt, nämlich der Dichtspalt 19.

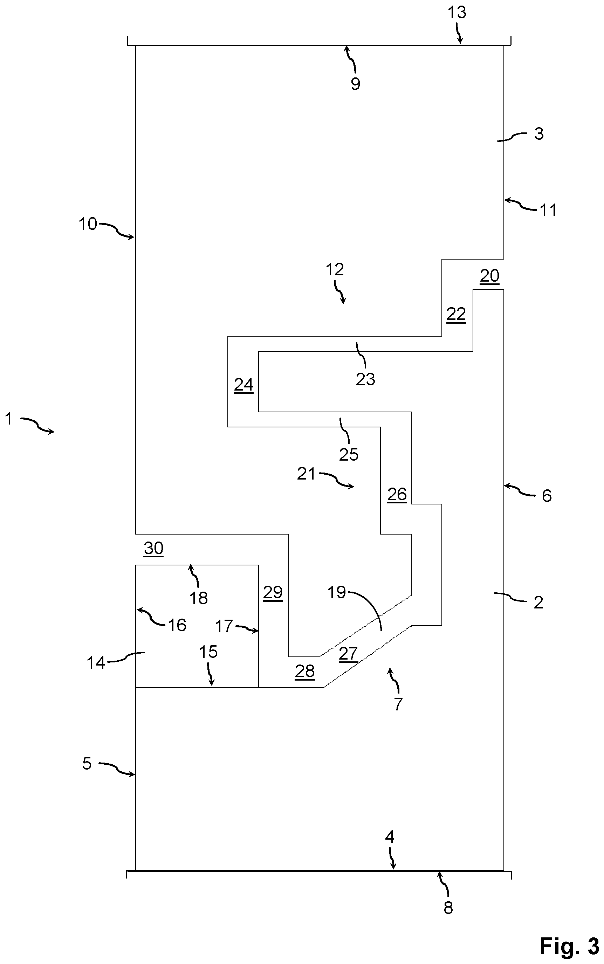

Das in Fig. 2 und Fig. 3 dargestellt Profil des Dichtspaltes 19 - und damit der Dichtspalt 19 selbst - weist im Bereich der zweiten Seitenfläche 6 bzw. 11 einen Endabschnitt auf. Dieser Endabschnitt wird im Folgenden als Eingangsabschnitt 15 bezeichnet. Dieser Eingangsabschnitt 20 weist als Abstand zur gemeinsamen Achse A1 einen Abstand in Höhe eines ersten Radius auf. Der Eingangsabschnitt 20 ist als axial verlaufender Spalt (d.h. Axialspalt) ausgebildet.

An den Eingangsabschnitt 20 schließt sich der Mäanderabschnitt 21 an. Dieser Mäanderabschnitt 21 besitzt ein im Allgemeinen als mäanderförmig (zick-zack-förmig) zu beschreibendes Profil. Dieses mäanderförmige Profil besteht aus einer Kombination von Axial-, Radial- und Axial-Radial-Spalten. Genauer weist der Mäanderabschnitt 21 des Dichtspaltes 19, beginnend vom Eingangsabschnitt, folgende Teilabschnitte auf: (a) einen ersten Radialspalt 22; (b) einen ersten Axialspalt 23, welcher einen Radius kleiner als der Eingangsabschnitt 20 und eine Spalthöhe kleiner als der Eingangsabschnitt 20 aufweist; (c) einen zweiten Radialspalt 24; (d) einen zweiten Axialspalt 25, welcher einen Radius kleiner als der erste Axialspalt 23 und eine Spalthöhe kleiner als der Eingangsabschnitt 20 aufweist; (e) einen dritten Radialspalt 26 mit einem Versatz; (f) einen kombinierten Axial-Radial-Spalt 27; (g) einen dritten Axialspalt 28, welcher einen Radius kleiner als ein Ausgangsabschnitt 30 aufweist; und (h) einen vierten Radialspalt 29.

Eine Begrenzungsfläche des vierten Radialspaltes 29 wird durch die zweite Seitenfläche 17 des Zusatzrings 14 gebildet. Ferner bilden der Axial-Radial-Spalt 27, der dritte Axialspalt 28 und der vierte Radialspalt 29 eine Art Fangrinne aus. Der vierte Radialspalt 29 ist ferner als Hinterschneidung ausgebildet.

An den Mäanderabschnitt 21 schließt sich ein Ausgangsabschnitt 30 des Dichtspalts 19 an. Der Ausgangsabschnitt 30 ist ein Endabschnitt des Dichtspalts 19 im Bereich der ersten Seitenfläche 10 bzw. 16. Der Ausgangsabschnitt 30 ist als axial verlaufender Abschnitt (Axialspalt) ausgebildet. Der Ausgangsabschnitt 30 weist als Abstand zur gemeinsamen Achse A1 einen Abstand in Höhe eines zweiten Radius auf. Der zweite Radius ist geringer als der erste Radius des Eingangsabschnitts 20. Die in radialer Richtung innenliegende Begrenzungsfläche des Ausgangsabschnitts 30 wird durch die außenliegende Mantelfläche 18 des Zusatzrings 19 gebildet.

Das in den Figuren dargestellte Dichtelement 1 ist aus einem Stahlwerkstoff hergestellt. Der Innenring 2 und der Außenring 3 wurden gehärtet. Außerdem wurden die Stirnflächen 5, 6 des Innenrings 2 und die Stirnflächen 10, 11 des Außenrings 3 plangeschliffen.

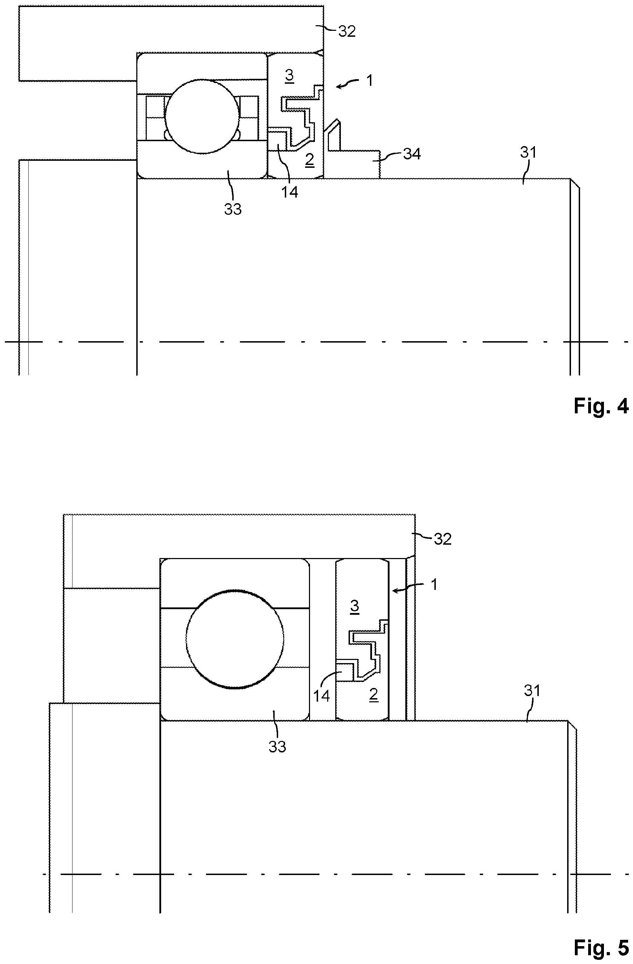

Die Figuren 4 und 5 zeigen verschiedene Einbausituationen des Dichtelements 1, d.h. den Einbau und das Zusammenwirken der Dichtelements 1 mit weiteren Maschinenbauelementen.

Die Figuren 4 und 5 zeigen jeweils eine Welle 31, ein Gehäuseteil 32, ein Kugellager 33 und das Dichtelement 1. Das Dichtelement 1 besteht - wie oben beschrieben - aus dem Innenring 2, dem Außenring 3 sowie dem Zusatzring 14. Das Gehäuseteil 32 stellt ein "erstes Maschinenbauteil" im Sinn der vorliegenden Erfindung und die Welle 31 ein "zweites Maschinenbauteil" im Sinn der Erfindung dar. Die Dichtung 1 dient folglich der Abdichtung einer zylindrischen Innenfläche des Gehäuseteils 32 und einer zylindrischen Außenfläche der Welle 31. Zwischen Welle 31 und Gehäuseteil 32 ist ferner das Kugellager 33 angebracht. Das Kugellager 33 ist in Figur 4 als Spindelkugellager ausgebildet. In Figur 5 ist das Kugellager 33 als Rillenkugellager ausgebildet.

In der in Figur 4 dargestellten Einbausituation ("Spindelkugellager") ist das Dichtelement 1 in axialer Richtung direkt anschließend an das Kugellager 33 angebracht. Mittels einer Wellenmutter 34 kann das Dichtelement 1 gegen das Kugellager 33 gedrückt werden. Es erfolgt auf diese Weise ein Vorspannen (Anstellen) des Kugellagers 33 über die Dichtung 1. Genauer wird das Kugellager 33 über den gehärteten, plangeschliffenen Innenring 2 angestellt. Die sonst üblichen Distanzhülsen sind nicht nötig.

In der in Figur 5 dargestellten Einbausituation ("Rillenkugellager") ist das Dichtelement 1 nicht direkt anschließend an das Kugellager 33 angebracht, d.h. das Dichtelement 1 ist in axialer Richtung gesehen beabstandet zum Kugellager 33 angebracht. Folglich erfolgt in dieser Einbausituation kein Anstellen des Kugellagers 33 über die Dichtung 1. In dieser Einbausituation kann daher ggf. auf das Verwenden plangeschliffener Außen- bzw. Innenringe verzichtet werden. Auch ist es möglich, in einer derartigen Einbausituation ein Dichtelement 1 zu verwenden, welches aus einer Aluminiumlegierung besteht.

### BEZUGSZEICHENLISTE

- 1: Dichtelement
- 2: Innenring
- 3: Außenring
- 4: innenliegende Mantelfläche
- 5: erste Seitenfläche, erste Stirnfläche
- 6: zweite Seitenfläche, zweite Stirnfläche
- 7: außenliegende Mantelfläche
- 8: zylindrische Außenfläche
- 9: außenliegende Mantelfläche
- 10: erste Seitenfläche, erste Stirnfläche
- 11: zweite Seitenfläche, zweite Stirnfläche
- 12: innenliegende Mantelfläche
- 13: zylindrische Innenfläche
- 14: Zusatzring
- 15: innenliegende Mantelfläche
- 16: erste Seitenfläche, erste Stirnfläche
- 17: zweite Seitenfläche, zweite Stirnfläche
- 18: außenliegende Mantelfläche
- 19: Dichtspalt
- 20: Eingangsabschnitt
- 21: Mäanderabschnitt
- 22: erster Radialspalt
- 23: erster Axialspalt
- 24: zweiter Radialspalt
- 25: zweiter Axialspalt
- 26: dritter Radialspalt
- 27: Axial-Radial-Spalt
- 28: dritter Axialspalt
- 29: vierter Radialspalt
- 30: Ausgansabschnitt
- 31: Welle
- 32: Gehäuseteil
- 33: Kugellager
- 34: Wellenmutter

- A1: gemeinsame Achse

## Patentansprüche

1. Dichtelement (1), zur Abdichtung einer zylindrischen Innenfläche (13) eines ersten Maschinenbauteils und einer zylindrischen Außenfläche (8) eines zweiten Maschinenbauteils, mit:
- einem Innenring (2),
- einem koaxial zum Innenring (2) angeordneten Zusatzring (14), welcher mit einem Teil einer äußeren Mantelfläche (7) des Innenrings (2) verbunden ist,
- einem koaxial zum Innenring (2) angeordneten Außenring (3), und
- einem Dichtspalt (19), welcher durch eine außenliegende Mantelfläche (7) des Innenrings (2), eine innenliegende Mantelfläche (12) des Außenrings (3) sowie durch eine außenliegende Mantelfläche (18) und eine Stirnseite (17) des Zusatzrings (14) gebildet wird, und welcher in einem Axialschnitt durch die gemeinsame Achse (A1) des Innenrings (2), des Außenrings (3) und des Zusatzrings (14) ein mäanderförmiges Profil aufweist;
wobei das Profil des Dichtspalts (19) folgende Profilabschnitte aufweist:
- einen Eingangsabschnitt (20) als einen erster Endabschnitt des Dichtspalts (19) mit einem ersten Radius zur gemeinsamen Achse (A1);
- einem Ausgangsabschnitt (30) als einen zweiten Endabschnitt des Dichtspalts (19) mit einem zweiten Radius zur gemeinsamen Achse (A1), wobei der zweite Radius kleiner als der erste Radius ist; und
- einen zwischen dem Eingangsabschnitt (20) und dem Ausgangsabschnitt (30) ausgebildeten Mäanderabschnitt (21);
wobei die außenliegende Mantelfläche (18) des Zusatzrings (14) eine Begrenzungsfläche des Ausgangsabschnittes (30), insbesondere die radial innenliegende Begrenzungsfläche des Ausgangsabschnitts (30), bildet; und **dadurch gekennzeichnet, dass** der Mäanderabschnitt (21) des Dichtspaltes (19), beginnend vom Eingangsabschnitt (20) und endend am Ausgangsabschnitt (30), folgende Teilabschnitte aufweist:
- einen ersten Radialspalt (22);
- einen ersten Axialspalt (23), welcher einen Radius kleiner als der Eingangsabschnitt (20) aufweist;
- einen zweiten Radialspalt (24);
- einen zweiten Axialspalt (25), welcher einen Radius kleiner als der erste Axialspalt (23) aufweist;
- einen dritten Radialspalt (26);
- einen kombinierten Axial-Radial-Spalt (27);
- einen dritten Axialspalt (28), welcher einen Radius kleiner als der Ausgangsabschnitt (30) aufweist; und
- einen vierten Radialspalt (29).

2. Dichtelement nach Anspruch 1, wobei der Innenring (2) und/oder der Außenring (3) aus einem Stahlwerkstoff, insbesondere aus einem gehärteten Stahlwerkstoff, bestehen.

3. Dichtelement nach einem der vorhergehenden Ansprüche, wobei eine oder mehrere Bauteilflächen des Innenrings (2) und/oder des Außenrings (3), insbesondere die Stirnflächen (5, 6) des Innenrings (2) und/oder die Stirnflächen (10, 11) des Außenrings (3), plangeschliffen sind.

4. Dichtelement nacheinem der vorhergehenden Ansprüche, wobei der erste Axialspalt (23) und der zweite Axialspalt (25) jeweils eine Spalthöhe kleiner als der Eingangsabschnitt (20) aufweisen.

5. Dichtelement nach einem der vorhergehenden Ansprüche, wobei der dritte Radialspalt (26) einen Versatz aufweist.

6. Dichtelement nach einem der vorhergehenden Ansprüche, wobei eine Begrenzungsfläche des vierten Radialspalts (29) durch die Stirnseite (17) des Zusatzrings (14) gebildet wird.

7. Dichtelement nach einem der vorhergehenden Ansprüche, wobei die innenliegende Mantelfläche (15) des Zusatzrings (14) mittels eines Presssitzes mit der äußeren Mantelfläche (7) des Innenrings (2) verbunden ist.

## Claims

1. Sealing element (1), for sealing a cylindrical inner surface (13) of a first machine component and a cylindrical outer surface (8) of a second machine component, comprising:
- an inner ring (2),
- an additional ring (14), which is arranged coaxially with respect to to the inner ring (2) and is connected to a part of an outer shell surface (7) of the inner ring (2),
- an outer ring (3) arranged coaxially with respect to to the inner ring (2), and
- a sealing gap (19), which is formed by an outer shell surface (7) of the inner ring (2), an inner shell surface (12) of the outer ring (3) and by an outer shell surface (18) and a face side (17) of the additional ring (14), and which has a meandering profile in an axial section through the common axis (A1) of the inner ring (2), outer ring (3) and additional ring (14);
wherein the profile of the sealing gap (19) has the following profile portions:
- an inlet portion (20) as a first end portion of the sealing gap (19) having a first radius to the common axis (A1) ;
- an outlet portion (30) as a second end portion of the sealing gap (19) having a second radius to the common axis (A1), wherein the second radius is smaller than the first radius; and
- a meandering portion (21) configured between the inlet portion (20) and the outlet portion (30) ;
wherein the outer shell surface (18) of the additional ring (14) forms a boundary surface of the outlet portion (30), in particular the radially inner boundary surface of the outlet portion (30); and
**characterized in that** the meandering portion (21) of the sealing gap (19), starting from the inlet portion (20) and ending at the outlet portion (30), has the following segments:
- a first radial gap (22);
- a first axial gap (23), which has a radius smaller than the inlet portion (20);
- a second radial gap (24);
- a second axial gap (25), which has a radius smaller than the first axial gap (23);
- a third radial gap (26);
- a combined axial-radial gap (27);
- a third axial gap (28), which has a radius smaller than the outlet portion (30); and
- a fourth radial gap (29).

2. Sealing element according to Claim 1, wherein the inner ring (2) and/or the outer ring (3) consist of a steel material, in particular of a hardened steel material.

3. Sealing element according to one of the preceding claims, wherein one or more component surfaces of the inner ring (2) and/or of the outer ring (3), in particular the end faces (5, 6) of the inner ring (2) and/or the end faces (10, 11) of the outer ring (3), are surface ground.

4. Sealing element according to one of the preceding claims, wherein the first axial gap (23) and the second axial gap (25) respectively have a gap height smaller than the inlet portion (20).

5. Sealing element according to one of the preceding claims, wherein the third radial gap (26) has an offset.

6. Sealing element according to one of the preceding claims, wherein a boundary surface of the fourth radial gap (29) is formed by the face side (17) of the additional ring (14).

7. Sealing element according to one of the preceding claims, wherein the inner shell surface (15) of the additional ring (14) is connected by means of a press fit to the outer shell surface (7) of the inner ring (2).

## Revendications

1. Elément d'étanchéité (1) destiné à assurer l'étanchéité entre une surface cylindrique intérieure (13) d'un premier composant de machine et une surface cylindrique extérieure (8) d'un deuxième composant de machine, l'élément présentant
une bague intérieure (2),
une bague supplémentaire (14) disposée coaxialement par rapport à la bague intérieure (2) et reliée à une partie de la surface d'enveloppe extérieure (7) de la bague intérieure (2),
une bague extérieure (3) disposée coaxialement par rapport à la bague intérieure (2) et
un interstice d'étanchéité (19) formé par la surface d'enveloppe extérieure (7) de la bague intérieure (2), la surface d'enveloppe intérieure (12) de la bague extérieure (3) ainsi que la surface d'enveloppe extérieure (18) et le côté frontal (17) de la bague supplémentaire (14), et qui en coupe axiale à travers l'axe (A1) commun de la bague intérieure (2), de la bague extérieure (3) et la bague supplémentaire (14) présente un profil en forme de méandres,
le profil de l'interstice d'étanchéité (19), comprenant les sections de profil suivantes :
une section d'entrée (20) configurée comme première section d'extrémité de l'interstice d'étanchéité (19) et présentant un premier rayon par rapport à l'axe commun (A1),
une section de sortie (30) configurée comme deuxième section d'extrémité de l'interstice d'étanchéité (19) et présentant un deuxième rayon par rapport à l'axe commun (A1), le deuxième rayon étant plus petit que le premier rayon et
une section (21) en méandres formée entre la section d'entrée (20) et la section de sortie (30),
la surface extérieure d'enveloppe (18) de la bague supplémentaire (14) formant une surface qui délimite la section de sortie (30) et en particulier la surface radialement intérieure qui délimite la section de sortie (30) et
**caractérisé en ce que**
la section (21) en méandres de l'interstice d'étanchéité (19), qui commence à la section d'entrée (20) et se termine à la section de sortie (30) présente les sections partielles suivantes :
un premier interstice radial (22),
un premier interstice axial (23) dont le rayon est inférieur à celui de la section d'entrée (20),
un deuxième interstice radial (24),
un deuxième interstice axial (25) dont le rayon est plus petit que celui du premier interstice axial (23),
un troisième interstice radial (26),
un interstice axial-radial combiné (27),
un troisième interstice axial (28) dont le rayon est plus petit que celui de la section de sortie (30) et
un quatrième interstice radial (29).

2. Elément d'étanchéité selon la revendication 1, dans lequel le matériau de la bague intérieure (2) et/ou de la bague extérieure (3) est un acier et en particulier en un acier durci.

3. Elément d'étanchéité selon l'une des revendications précédentes, dans lequel une ou plusieurs surfaces de la bague intérieure (2) et/ou de la bague extérieure (3) et en particulier les surfaces frontales (5, 6) de la bague intérieure (2) et/ou les surfaces frontales (10, 11) de la bague extérieure (3) sont planées.

4. Elément d'étanchéité selon l'une des revendications précédentes, dans lequel le premier interstice axial (23) et le deuxième interstice axial (25) présentent chacun une hauteur inférieure à celle de la section d'entrée (20).

5. Elément d'étanchéité selon l'une des revendications précédentes, dans lequel le troisième interstice radial (26) présente un décalage.

6. Elément d'étanchéité selon l'une des revendications précédentes, dans lequel une surface qui délimite le quatrième interstice radial (29) est formée par le côté frontal (17) de la bague supplémentaire (14) .

7. Elément d'étanchéité selon l'une des revendications précédentes, dans lequel la surface intérieure d'enveloppe (15) de la bague supplémentaire (14) est reliée par sertissage à la surface d'enveloppe extérieure (7) de la bague intérieure (2).
